# EUROPÄISCHE PATENTSCHRIFT

(11) **EP 2 039 664 B1**
(45) Veröffentlichungstag und Bekanntmachung des Hinweises auf die Patenterteilung: **27.02.2013**
(21) Anmeldenummer: 08016342.1
(22) Anmeldetag: 17.09.2008
(51) Int. Cl.: C04B 28/14

(54) **Mineralischer Wärmedämmstoff**
Mineral heat insulation material
Isolant thermique minéral

(30) Priorität: 20.09.2007 DE 102007045059
(43) Veröffentlichungstag der Anmeldung: 25.03.2009
(73) Patentinhaber: Thomas, Tanja, 31840 Fischbeck (DE)
(72) Erfinder: Mertens, Antonius, 31840 Fischbeck (DE)
(74) Vertreter: Flosdorff, Jürgen

(56) Entgegenhaltungen:
- AT-B- 319 126
- DE-A1- 1 646 495
- DE-A1- 2 752 897
- DE-A1- 19 651 448
- DE-U1- 29 600 466

## Beschreibung

Die Erfindung betrifft einen mineralischen Wärmedämmstoff, der beispielsweise als Innenwanddämmung, Dachdämmung, Fußbodendämmung, Fassadendämmung, Dämmung von Durchfahrten z.B. zu Tiefgaragen und zum Auffüllen von Hohlräumen mit wärmedämmender Wirkung sowie Ausbildung einer tragfähigen Wärmedämmung unter Betonkonstruktionen im Hoch- und Tiefbau verwendbar ist. Die Erfindung betrifft ferner ein Verfahren zum Aufbringen einer Wärmedämmschicht auf eine Fläche.

Es ist bekannt, aus Kalziumsilikat-Hydraten, Kalk, Sand, Zement, Wasser und Porenbildner eine Mischung herzustellen, die zu großen Blöcken gegossen, auf ca. 190°C erhitzt und nach dem Abkühlen durch Autoklaven in Steinplatten geschnitten wird. Dies ist mit einem großen Energieaufwand verbunden und hat außerdem den Nachteil, dass in vielen Anwendungsfällen durch Verlegen der Wärmedämmplatten nicht die gesamte wärmeverlustige Fläche abgedeckt werden kann, da einige Flächenteile häufig z.B. durch Lüftungskanäle oder Kabel/Rohrleitungen etc. verdeckt sind. Bei einer Stahlbetondecke kann in der Regel nur etwa 85% der Fläche durch Wärmedämmplatten abgedeckt werden.

EP 0 490 160 A1 offenbart ein Verfahren zum Herstellen von Gipsbaustoffen, bei dem Alphahalbhydrat mit einer spezifischen Oberfläche nach Blaine mit Betahalbhydrat gemischt wird und diesem Gemisch ein vorgefertigter Tensidschaum hinzugefügt wird, der mittels einer Schaumkanone bei einem bestimmten Wasser-Tensid-Luft-Verhältnis und mit einer bestimmten Schaumstrecke hergestellt wird, so dass sich eine im wesentlichen gleichmäßige Porengröße ergeben soll. Die Aufschlämmung wird dann einer geeigneten Formgebung unterworfen, insbesondere in der Form von Wandplatten, die dann in einen Autoklaven eingebracht werden, wo sie einer Sattdampfbehandlung und einer Temperatur von bis zum 200°C ausgesetzt werden.

AT 319 126 B offenbart ein Verfahren zum Aufbringen eines Putzmörtels als poröse Dämm-Masse auf einen Putzuntergrund, bzw. eine Wand durch Herstellung einer Gipsmörtelmasse enthaltend: Gips, Kalksteinmehl, Kalkhydrat, einen Abbindeverzögerer, beispielsweise in Form von Zitronensäure und Schäumungsmittel auf Basis von alpha-Olefinsulfonat, Schwefelsäureester, Schaummittel-Lösung, Schaumstabilisator und Glykol.

Der vorliegenden Erfindung liegt die Aufgabe zugrunde, eine bessere Lösung für diese Probleme anzugeben.

Diese Aufgabe wird erfindungsgemäß durch die Merkmale der Patentansprüche 1,7 und 8 gelöst.

Vorteilhafte Ausgestaltungen der Erfindung sind in den abhängigen Ansprüchen gekennzeichnet.

Die erfindungsgemäße Mischung enthält die Bestandteile Alpha Halbhydrat oder Betagips oder ein Gemisch von zwei dieser Bestandteile als hydraulisches Bindemittel, Porenbildner aus Aluminiumpulver und Kalksteinmehl, die miteinander vermischt sind, Kalk und einen Verzögerer wie Zitronensäure. Die Zitronensäure wird - ebenso wie die anderen Bestandteile - in gemahlener Form zugegeben.

Der Kalk wird in einer solchen Menge zugegeben, dass die fertige Mischung erfindungsgemäß einen pH-Wert von 11,8 oder darüber hat. Ohne Kalk läge der pH-Wert üblicherweise bei 8 bis 10. Durch das alkalische Milieu reagiert das Aluminiumpulver unter Bildung von Aluminat und Wasserstoff, der die Bindemittelmasse auflockert, bzw. durch die dann eintretende Wärmeentwicklung entsteht Wasserdampf, der dann das feste Gefüge auflockert und die Poren hinterlässt. Die Porenstruktur ist hochgradig gleichmäßig. Der Wärmedämmstoff ist damit dampfdiffusionsoffen.

Die Zitronensäure in Kombination mit den anderen Bestandteilen hat den Vorteil, dass die Druckfestigkeit nicht abnimmt sondern immer gleich bleibt. Bei den herkömmlichen mineralischen Wärmedämmstoffen hingegen nimmt die Druckfestigkeit um ca. 5 bis 8% ab. Bei der erfindungsgemäßen Mischung bleibt die Druckfestigkeit erhalten.

Die wesentlichen Bestandteile der Mischung setzen sich erfindungsgemäß wie folgt zusammen:

| | |
|---|---|
| Bindemittel | 80-90 Gew.-% der gesamten Feststoffe |
| Aluminium-Kalksteinpulver in der Mischung 90% Kalksteinpulver + 10% Aluminium | 5 - 14,95 Gew.-% der gesamten Feststoffe |
| Kalk | 0,5 - 5,0 Gew.-% der gesamten Feststoffe |
| Zitronensäure | ca. 0,05 Gew.-% der gesamten Feststoffe |

Der Wasser/Bindemittelfaktor beträgt 0,35 - 0,65 %.

Die Bestandteile des mineralischen Wärmedämmstoffs werden vorzugsweise vor Ort unter Zugabe von Wasser gemischt und in flüssiger (bzw. pastöser) Form auf den Untergrund gegossen. Dabei hat die Mischung vorzugsweise ein solche Konsistenz, dass sie selbstnivellierend ist.

Die Wärmedämmstoff-Mischung wird vorzugsweise in einer Dicke zwischen 1 und 2 cm auf den Untergrund gegossen, wobei das eingebrachte Gemisch nicht arbeitsaufwändig nivelliert und abgezogen werden muss. Das Einbringen auf die Verlegestelle kann beispielsweise mit Fließestrichpumpen erfolgen. Das Material expandiert dann bei der oben genannten Dicke von 2 cm des Grundmaterials auf eine Gesamtdicke von ca. 51 mm und ergibt eine homogene Dämmschicht gleicher Dicke und Qualität, die hochfest ist.

Das gegossene Dämmstoffmaterial ist nach ca. 60 min begehbar und erreicht nach ca. 24 Stunden seine hohe Endfestigkeit.

Der Energieaufwand zur Herstellung der Wärmedämmschicht beträgt nur etwa 1 % des Energieaufwandes, der beispielsweise durch Porenbetonsteine benötigt wird.

Der chemische Prozess verläuft bei dem erfindungsgemäßen Wärmedämmstoff folgendermaßen: Das Aluminium expandiert bei dem pH-Wert von 11,8 oder mehr und erzeugt unter Bildung von Wasserstoff Poren, die nach der Austrocknung stabil im Gefüge vorliegen. Diese Poren sind mit Luft gefüllt, so dass ein hochgradig wirksamer Wärmedämmstoff vorliegt, weil Luft einer der schlechtesten Wärmeleiter ist. Die fertige Dämmschicht ist ohne Ausdünstungen und nicht-brennbar (Brennstoffklasse A1).

Außerdem ist das erfindungsgemäße Wärmedämmstoffmaterial zu 100% recyclebar. Wenn das Material wieder ausgebaut werden muss, kann es nach nochmaligem Vermahlen mit einem Anteil an hydraulischem Bindemittel unter Zugabe von Porenbildnern erneut mit Wasser vermischt werden, wodurch wieder das gleiche Produkt entsteht.

Der erfindungsgemäße mineralische Dämmstoff kann in der Altbausanierung auf Holzfußböden aufgegossen werden, die statisch ein geringes Gewicht verlangen. Er ist auch hervorragend als trittschalldämmendes Material z.B. bei Holzbalkendecken mit niedrigem Eigengewicht einsetzbar. Als flüssige, selbstnivellierende Dämmung wird jede Stelle des zu dämmenden Bodenfläche erreicht. Die Erfindung ermöglicht es auch, schnell und einfach eine Wandfläche zu dämmen. Bei der Dämmung einer Wand kann abschnittsweise von unten nach oben mit pastösem Grundmaterial beispielsweise in Streifen einer Höhe von 1,5 m vorgegangen werden.

Es können auch Platten in jeglicher Abmessung zur direkten Verklebung mittels handelsüblichem Kleber als Fassadendämmplatten vorgefertigt werden. Diese Fassadendämmung hat den Vorteil, dass eine gute Dämmung erzielt wird. Das Dämmsystem lässt die Sonnenenergie in den massiven Baustoff und ist zugleich dampfdiffusionsoffen für eventuellen Feuchtetransport. Damit ist eine Schimmelpilzbildung innerhalb des Gebäudes auszuschließen. Den Temperaturausgleich zwischen Raumluft und Außentemperatur bezeichnet man auch als instationären U-Wert, welcher für ein ausgeglichenes Raumklima unter Einhaltung einer guten Wärmedämmung sorgt. Entgegen der Energieeinsparungsverordnung ist es mit diesem System möglich, die solaren Gewinne mit in die Verlust- bzw. Gewinnberechnung einzuberechnen.

## Patentansprüche

1. Verfahren zum Aufbringen einer Wärmedämmschicht auf eine Fläche,
**dadurch gekennzeichnet,**
**dass** die Mischung gemäß Anspruch 7 unter Zugabe von Wasser gemischt wird, derart, dass das Gemisch einen pH-Wert von 11,8 oder darüber hat, und dass das Gemisch in flüssiger oder pastöser Form auf die Fläche aufgebracht wird,
wobei der Wasser/Bindemittelfaktor 0,35 bis 0,65% beträgt.

2. Verfahren nach Anspruch 1,
**dadurch gekennzeichnet,**
**dass** die Fläche eine Bodenfläche ist.

3. Verfahren nach Anspruch 1,
**dadurch gekennzeichnet,**
**dass** die Fläche eine Wandfläche ist und dass das Gemisch eine pastöse Konsistenz hat.

4. Verfahren nach einem der Ansprüche 1 bis 3,
**dadurch gekennzeichnet,**
**dass** die Bestandteile am Einbauort gemischt werden.

5. Verfahren nach einem der Ansprüche 1 bis 4,
**dadurch gekennzeichnet,**
**dass** die fertige Mischung eine solche Konsistenz hat, dass sie selbstnivellierend ist.

6. Verfahren nach einem der Ansprüche 1 bis 5,
**dadurch gekennzeichnet,**
**dass** der eingebrachte Wärmedämmstoff nach ca. 24 h auf seine Endfestigkeit erhärtet.

7. Mischung,
**dadurch gekennzeichnet,**
**dass** sie die Bestandteile Alpha Halbhydrat oder Betagips oder ein Gemisch von zwei dieser Bestandteile als hydraulisches Bindemittel in einer Menge von 80 - 90 Gew.-% der gesamten Feststoffe, Aluminiumpulver, vermischt mit Kalksteinmehl, in einer Menge von 5 - 14,95 Gew.-% der gesamten Feststoffe und in einem Verhältnis von 90% Kalksteinmehl zu 10% Aluminiumpulver, Kalk in einer Menge von 0,5 - 5,0 Gew.-% der gesamten Feststoffe und Zitronensäure in einer Menge von ca. 0,05 Gew.-% der gesamten Feststoffe enthält.

8. Mineralischer Wärmedämmstoff, erhältlich nach dem Verfahren nach Anspruch 1.

9. Wärmedämmstoff nach Anspruch 8,
**dadurch gekennzeichnet,**
**dass** der Wärmedämmstoff zu 100 % recyclebar ist.

## Claims

1. A method of applying a heat insulating layer to a surface, **characterised in that** the mixture as claimed in claim 7 is mixed with the addition of water such that the mixture has a pH value of 11.8 or above and that the mixture is applied to the surface in liquid or paste form, wherein the water/bonding agent factor is 0.35 to 0.65%.

2. A method as claimed in claim 1, **characterised in that** the surface is a floor surface.

3. A method as claimed in claim 1, **characterised in that** the surface is a wall surface and that the mixture has a pasty consistency.

4. A method as claimed in one of claims 1 to 3, **characterised in that** the components are mixed at the place of use.

5. A method as claimed in one of claims 1 to 4, **characterised in that** the finished mixture has such a consistency that it is self-leveling.

6. A method as claimed in one of claims 1 to 5, **characterised in that** the applied heat insulating material hardens to its final strength after ca. 24 h.

7. A mixture, **characterised in that** it contains the components alpha-hemihydrate or beta gypsum or a mixture of these two components as a hydraulic bonding agent in an amount of 80-90wt.% of the total solid materials, aluminium powder, mixed with limestone flour, in an amount of 5-14.95wt.% of the total solid materials and in a ratio of 90% limestone flour to 10% aluminium powder, lime in an amount of 0.5-5.0wt.% of the total solid materials and citric acid in the amount of ca.0.05wt.% of the total solid materials.

8. A mineral heat insulating material obtainable by the method as claimed in claim 1.

9. A heat insulating material as claimed in claim 8, **characterised in that** the heat insulating material is up to 100% recyclable.

## Revendications

1. Procédé servant à appliquer une couche isolante thermique sur une surface,
**caractérisé en ce**
**que** le mélange est effectué selon la revendication 7 en ajoutant de l'eau de telle manière que le mélange présente une valeur pH de 11,8 ou plus, et en ce que le mélange est appliqué sur la surface sous une forme liquide ou pâteuse,
sachant que le rapport eau/liants est compris entre 0,35 et 0,65 %.

2. Procédé selon la revendication 1,
**caractérisé en ce**
**que** la surface est une surface au sol.

3. Procédé selon la revendication 1,
**caractérisé en ce**
**que** la surface est une surface murale, et en ce que le mélange présente une consistance pâteuse.

4. Procédé selon l'une quelconque des revendications 1 à 3,
**caractérisé en ce**
**que** les composants sont mélangés à l'emplacement de l'installation.

5. Procédé selon l'une quelconque des revendications 1 à 4,
**caractérisé en ce**
**que** le mélange fini présente une telle consistance qu'il est autonivelant.

6. Procédé selon l'une quelconque des revendications 1 à 5,
**caractérisé en ce**
**que** le matériau isolant thermique introduit durcit pour atteindre sa dureté finale après environ 24 h.

7. Mélange,**caractérisé en ce**
**qu'**il contient les composants suivants, semi-hydrate alpha ou gypse bêta, ou un mélange de ces deux composants comme liant hydraulique en une quantité allant de 80 à 90 % en poids de la totalité des solides, de la poudre d'aluminium, mélangée à de la poudre calcaire, en une quantité allant de 5 à 14,95 % en poids de la totalité des solides et selon un rapport de 90 % de poudre calcaire pour 10 % de poudre d'aluminium, de la chaux en une quantité allant de 0,5 à 5,0 % en poids de la totalité des solides et de l'acide citrique en une quantité de 0,05 % environ en poids de la totalité des solides.

8. Matériau isolant thermique minéral, obtenu selon le procédé selon la revendication 1.

9. Matériau isolant thermique selon la revendication 8,
**caractérisé en ce**
**que** ledit matériau isolant thermique peut être recyclé à 100 %.
